# EUROPEAN PATENT APPLICATION

(11) **EP 2 412 672 A1**
(43) Date of publication of application: **01.02.2012**
(21) Application number: 10755479.2
(22) Date of filing: 26.03.2010
(51) Int. Cl.: C01B 39/26, C01B 39/38, B01J 29/40, B01D 53/38, B01D 53/56

(54) **METHOD FOR THE PREPARATION OF A ZEOLITE-BASED MONOLITHIC STRUCTURE**

(30) Priority: 26.03.2009 ES 200930012
(71) Applicant: UNIVERSIDAD DEL PAIS VASCO-EUSKAL HERRIKO UNIBERSITATEA, 48940 Leioa (Vizcaya) (ES)
(72) Inventor: ARANZABAL MAIZTEGUI, Asier, E-48940 Leioa (Vizcaya) (ES); ITURBE VALLEJO, Deiene, E-48940 Leioa (Vizcaya) (ES); GONZÁLEZ MARCOS, María, del Pilar, E-48940 Leioa (Vizcaya) (ES); GONZÁLEZ MARCOS, José, Antonio, E-48940 Leioa (Vizcaya) (ES); GONZÁLEZ VELASCO, Juan, Ramón, E-48940 Leioa (Vizcaya) (ES); ROMERO SÁEZ, Manuel, E-48940 Leioa (Vizcaya) (ES)
(74) Representative: Carpintero Lopez, Francisco
(86) International application number: PCT/ES2010/070181
(87) International publication number: WO 2010/109052

(57) **Abstract**

The invention describes a process for preparing a zeolite-based monolith comprising the steps of dry-mixing zeolite particles and a temporary binder until homogenization; adding silica and water dispersion; wet-kneading and high-shear mixing until obtaining a homogenous pulp; extrusion-molding the pulp resulting from the previous step; controlled drying of the mold obtained; and oxidizing at a high temperature to obtain the monolith. The invention also describes the use of said monolith as a catalyst, as a catalyst support for the chemical conversion of the gaseous components or as an adsorbent for the physicochemical separation of one or several components of a gas mixture.

## Description

### Field of the Invention

The present invention relates to a process for obtaining monolithic zeolite structures or molecular sieves useful generally as catalysts and catalyst supports. The process particularly comprises preparing a homogenous pulp comprising zeolite, a temporary binder, a silica and water suspension, and the extrusion thereof for shaping said monolithic structures, for example the so-called honeycomb type. Said structures have a high specific surface area, and a high crushing strength and can be used in any chemical process as catalysts or adsorbents, and particularly in gaseous pollutant purification.

### Background of the Invention

In recent decades, the relevance of the zeolites as catalysts and adsorbents in the chemical industry for obtaining new chemical products, as well as for purifying pollutant gaseous and liquid streams, has significantly increased due to their porous structure, acidic properties, good thermal stability and ion exchange capacity.

The use of fixed catalyst/adsorbent beds in industrial applications is unadvisable because they cause unbearable load losses in the system. For this reason, fixed beds of the catalysts in the form of wafers are being replaced with monolithic structures made up of a multitude of thin-walled parallel channels in which the flow takes place throughout these channels. Because of their appearance, these structures are also referred to as honeycomb.

There are methods for preparing a zeolitic-surface monolith consisting of synthesizing the zeolite *"in situ"* on the surface of a pre-shaped monolith. Other methods are based on depositing a pre-synthesized zeolite on the surface of a pre-shaped monolith by means of the process known as washcoating. These methods have certain difficulties for uniformly synthesizing the zeolite throughout all the channels of the monolith and for sufficiently adhering the zeolite to the surface. In any of the cases, a small loss of material entails the loss of efficiency in the corresponding application process and therefore an important drawback.

An alternative method for introducing the active phase in the monolith is based on direct zeolites extrusion. This method has the advantage that the active phase is uniformly distributed in the entire monolith and it is possible to withstand a small loss of zeolitic surface material without affecting the durability and effectiveness.

High specific surface area oxides such as the oxides of aluminum, titanium, zirconium, or silicon can be prepared by extrusion in high-strength type catalytic supports structures in the form of a honeycomb. In contrast, zeolites are significantly more difficult to shape in this type of complex structures. Different approaches have therefore been developed to solve this drawback.

Recently, the incorporation of permanent binders such as silicon, aluminum, titanium oxides, etc., in their dry state in the preparation has been described in the state of the art in relation to preparing monolithic structures. The incorporation of these permanent binders leads to structures with greater mechanical resistance, especially if said permanent binders are incorporated in the form of precursors thereof.

Patent EP 0 197 645 describes the use of silicone resins as permanent binder precursors which are dissolved in a solvent or mixture of solvents of alcohol and water, such as methyl alcohol, ethyl alcohol or isopropyl alcohol. However the use of said solvents has drawbacks because highly toxic and inflammable vapors are produced during the process of preparing the monolithic structures.

Patent US 5,492,883 describes an alternative process for providing monolithic structures from zeolites comprising conventional steps of extrusion and sintering, and using, as a permanent binder precursor, an aqueous emulsion of silicone resin. However, the use of silicone due to its polymeric nature complicates controlling the viscosity of the zeolite pulp, the value of which is critical in the process of extruding the zeolite monolith. Furthermore, silicone resins are expensive.

Therefore, in view of the foregoing there is still a need in the state of the art to provide an alternative process of obtaining monolithic structures that overcome at least some of the aforementioned drawbacks.

In this sense, the inventors have surprisingly found that the use of a colloidal silica suspension as a permanent binder and the control of specific parameters during the process allows obtaining monolithic zeolite structures with excellent properties. In this sense, the monolithic structures obtained can be used in a wide range of applications, especially as catalysts, catalyst supports or absorbents.

### Description of the Invention

The invention relates in one aspect to a process for preparing a monolithic zeolite structure comprising the following steps:
(1) dry-mixing zeolite particles of a size less than 600 µm and a temporary binder until homogenization,
(2) adding silica and water suspension maintaining a driving torque value between 5-15 Nm, at a temperature comprised between 10 and 25ºC,
(3) wet-kneading and high-shear mixing until obtaining a homogenous pulp maintaining the temperature comprised between 10 and 25ºC,
(4) extrusion-molding the pulp resulting from the previous step maintaining the temperature of the extruder between 7 and 40ºC,
(5) drying the mold obtained, increasing the temperature from room temperature to a maximum of 120ºC with a heating rate comprised between 0.01 and 1.0ºC/min and a reduction of the relative humidity from relative ambient humidity to 0%,
(6) oxidizing at a high temperature, increasing the temperature from room temperature to a maximum of 1000ºC with a heating rate comprised between 0.10 and 20ºC/min.

A monolithic structure or monolith generally consists of a piece that is useful as a catalyst, catalyst support or adsorbent. It can have, for example, a tubular structure in which case it can operate inside a pipe through which a gas flow circulates, being interposed therein and serving as a catalyst or catalyst support for a reaction chemical or as an adsorbent to remove or reduce the content therein of specific compounds.

In the process, hereinafter process of the invention, the step (1) of dry-mixing can be carried out in a conventional mixer conventional to which between 85-98% by weight of zeolite and between 2-15% by weight of temporary binder in the form of dry solids are added. This step is carried out at room temperature and at a rotation speed of the kneading blades typically comprised between 20 and 80 r.p.m. during the time necessary to reach a uniform and homogenous distribution of the solid.

In principle, any zeolite is useful for carrying out the invention, such as, for example, and among others, ZSM-5, BETA, ZSM-8, ZSM-11, ZSM-12, mordenite, H-ferrierite, H-offretite, Hyper Y, USY zeolite, faujasite, zeolite X, zeolite A, zeolite L, mazzite, EMC-2, MAPO-36, AIP04-5, AIP04-8, VPI-5, and combinations thereof, as well as any natural zeolite, including chabazite, clinoptilolite, erionite, stilbite, phillipsite, heulandite, laumontite.

The step of dry-mixing is important for obtaining a material that is as homogenous as possible. For correct mixing, solid materials to be mixed must have a relative broad particle size distribution, which improves packing and reduces interstitial gaps. In this sense it is important for the particle distribution size of the zeolite to be broad enough to achieve good packing between the zeolite particles and large enough with respect to the particle size of the permanent binder in order for the latter to generate more binding points between the particles and thus confer greater mechanical resistance.

The inventors have determined that the zeolite particles must be less than 600 µm for the purpose of preventing the occurrence of cracks and fractures during drying. However, in order to eliminate event small fractures by milling, it is necessary to work with particle sizes less than 125 µm in diameter.

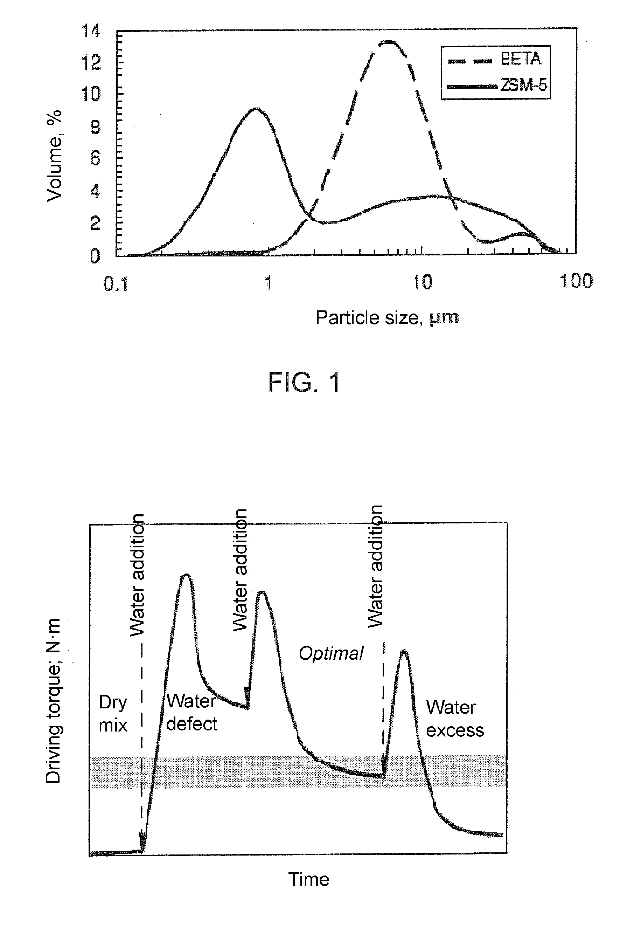

Figure 1 shows the distributions for the zeolites used according to a particular embodiment of the process of the invention. In both cases it is observed that the zeolites used have a particle size less than 80 µm, and a broad particle size distribution, especially in the case of ZSM-5. A typical method for reducing particle size is to grind the zeolite.

The temporary binders useful in the present invention are conventional binders well known by a person skilled in the art. Among others, they include, for example, cellulose ethers and derivatives thereof, such as, for example, methylcellulose, ethylhydroxyethylcellulose, hydroxybutylcellulose, hydroxybutyl methylcellulose, hydroxymethylcellulose, hydroxyethylcellulose, hydroxypropylcellulose, hydroxypropyl methylcellulose, hydroxyethyl methylcellulose, sodium carboxymethylcellulose, as well as starches, dextrins and mixtures thereof. In a particular embodiment the binder is methylcellulose.

After dry mixing and without stopping the kneading process, the SiO₂ suspension and the additional amount of water necessary for being able to obtain a homogenous pulp with rheological properties suitable for subsequent extrusion are added to the mixer. The amount of water necessary for attaining the suitable rheological properties is easily determined by a person skilled in the art. In this step (2) a precursor pulp of the zeolite monoliths the composition of which is shown in the following Table is obtained. This composition is made up of an aqueous phase and a solid phase having the following composition:

**Table**

| **Solid phase chemical composition** | **(% weight)** |
|---|---|
| Zeolite | 73-88 |
| Temporary binder | 2-7 |
| SiO₂ | 10-25 |

The composition of zeolite, temporary binder, water and colloidal silica establishes the rheological properties (plasticity) of the pulp which must be suitable for allowing extrusion through the extrusion nozzle. If the pulp is too viscous, it will block the barrel, whereas if it is not very viscous fresh monoliths are produced which do not withstand their own weight after extrusion. Figure 2 shows the evolution of the driving torque over time and with the addition of water. As can be seen, the addition of water causes a significant short-term increase of the driving torque, a maximum value is reached and then decreases to reach an equilibrium value. For a good extrusion, the driving torque equilibrium value must be within a relatively narrow range of values, depicted in Figure 2 in the gray-shaded area. The optimal value depends on the composition of the pulp, but for zeolite-based pulps the inventors have found it to be between 5-15 Nm.

When contacting the temporary binder, for example methylcellulose, and the water, the viscosity of the pulp increases due to viscous or friction effects such that the temperature of the pulp can reach 40ºC if it is not controlled. This causes the water to evaporate and a dryer pulp with unsuitable rheological properties. Therefore, by means of a cooling system the temperature of the kneader is controlled so that it remains between 10-25ºC. The speed of the blades is maintained between 20-70 r.p.m.

The amount of water present in the precursor pulp is comprised between 35-95% (% by weight with respect to the weight of solid phase). The amount of water is made up of the water present in the silica suspension itself and the amount of additional water added in this step (2).

The SiO₂ suspension which is used in the process of the present invention has alkaline pH, also known as basic sol, or an acid pH, acid sol. The suspension has a typical concentration of between 20% and 50% by weight of silica with respect to the total weight of the suspension; a viscosity between 4000 and 26000 MPa·s, a density between 1200 and 1320 kg/m³ measured at 25ºC and contains particles with dimensions of the order of nanometers and with a specific surface area between 125 and 550 m²/g. In a particular embodiment the colloidal silica selected has a particle size of 11.5 nm, which is small enough for the silica particles to fill the gaps between the zeolite particles.

These suspensions useful for putting the process of the invention into practice are commercial suspensions, although they can also be prepared as described, for example, in patent application WO99/01377.

In a preferred embodiment a silica suspension in water having a concentration of 40% by weight of silica with respect to the total weight of the suspension; a surface area of approximately 220 m²/g; a pH value of 9.8 and a density of 1300 kg/m³ at 25°C is used. The mean particle size is 11.5 nm.

The purpose of high-shear mixing is to break up the aggregates inherent to powder or those formed during the kneading and from eliminating the air bubbles formed in said kneading. The viscosity of the liquid should be high so that the filtration of the liquid, leading to more humid and other less humid solid region, does not occur. High-shear mixing is performed at room temperature (10-25ºC) and the rotation speed of the kneading blades is typically comprised between 1 and 5 r.p.m. A homogenous pulp that is shaped in the following step is obtained.

Step (4) comprises shaping the homogenous pulp resulting from step (3) in the desired shape of the final part or monolith by means of an extrusion process with an endless screw favoring the advance of the pulp through the extrusion nozzle. Any conventional extruder can be used in this step. In a particular embodiment the pulp is extruded in a 19/20DN BRABENDER^{®} single screw extruder head 19 mm in diameter and 20 D long, assembled on the PLASTI-CORDER^{®} PL-2000 base. The pulp is intermittently loaded into a box perpendicular to the barrel, where it is forced by means of a vertical plunger to enter therein. Inside the barrel, an endless screw makes the pulp advance towards the exit. Nozzles having different geometries are coupled at the head or outlet of the extruder to obtain the part with a different section (circular or square) and different cell densities (1-62 cells/cm²).

The shaped pulp coming out of the nozzle is collected with a conveyor belt the speed of which can be controlled for the purpose of preventing possible deformations in handling the extruded product for subsequent steps of the process.

The inventors have seen that for manufacturing a high-quality extrusion, it is necessary, in addition to a nozzle with the right design, to maintain control over the plasticity (viscosity) of the pulp during the extrusion by means of controlling the temperature.

Due to the viscous or friction effects occurring in extrusion through the nozzle, an excessive temperature increases cause the water to evaporate and a dryer pulp that is impossible to extrude. In contrast, by cooling the process, the extruded product has a minimum number of surface defects, its wet strength is maximum, the thin walls can be produced without changes in their dimensions and the binder (methylcellulose) does not migrate with the water during drying. Therefore, the temperature of the extruder is controlled and maintained between 7-40ºC by means of a cooling system.

Although the extrusion speed does not affect the formation of the structure through the nozzle, it does have an effect on the presence of defects therein. By increasing the extrusion speed a uniform density is obtained in the extracted crude product that facilitates handling and prevents the subsequent segregation of the binder during drying. In contrast, low speeds facilitating the formation of cavities in the structure because lower extrusion pressures are applied that do not increase the density of the ceramic body.

In order to be able to select the optimal extrusion speed, one which prevents the occurrence of surface defects, assays must be performed at different speeds recording both the extrusion pressure and stress, parameters which allow controlling the process for each composition. The relationship between both parameters must be linear.

The occurrence of surface defects, specifically those referred to as "dog teeth", increases at high extrusion speeds.

The inventors have determined that the optimal extrusion speed typically ranges between 20-80 rpm.

The parts shaped by extrusion are then conventionally air-dried using a suitable temperature and humidity program that does not alter their physical structure.

One of the problems of the step of drying is that organic binders such as methylcellulose tend to migrate or move over the ceramic surface during drying. The main problems the migration of the binder entails are that it causes non-uniformity in the strength of the body throughout the cross-section, generating regions of weakness in the moist body that is exposed to breaking and generates problems during calcination due to the formation of a surface film.

The drying of a ceramic body entails the shrinking of the structure. If this shrinking is not uniform, the body experiences uneven stresses, causing the occurrence of deformations and fractures. The shrinking generally occurs during the initial steps of drying (low temperatures) as the interparticle water evaporates. Therefore, fast drying programs must be avoided and the temperature and humidity must be carefully controlled for minimizing stresses in the structure.

Drying can be carried out in a conventional drying chamber that controls not only the temperature but also the relative humidity in a programmed manner. During drying, the temperature increases approximately from room temperature (20ºC) to 120ºC, with a heating rate comprised between 0.01 and 1.0ºC/min. The humidity decreases from approximately 80% (relative ambient humidity) to 0%.

In a particular embodiment the heating rate during the initial steps of drying is preferably reduced to 0.15ºC min⁻¹, maintaining the relative humidity during those steps above 70%.

All the drying tests performed at higher heating rates reflect the presence of this type of defects. The heating rate can be somewhat increased above 40ºC and up to 60ºC, but it still must be relative low. Taking these considerations into account, in a particular embodiment a four-step drying cycle for treating the extruded products is established (see Example 1).

Finally, the oxidation of the shaped parts is performed conventionally at a temperature greater than the temperature at which the temporary binder burns or oxidizes and the transformation of the permanent binder takes place. The temperature must, nevertheless, be less than the temperature at which the crystalline structure of the zeolite can be altered. In this step, a heating rate that does not alter the physical structure of the shaped parts is used. This step is performed in muffle furnace equipment with a heating rate programmer. The temperature during the step of calcination increases from room temperature to a maximum of generally 1000ºC, and the heating rates are comprised between 0.10-20ºC/min. In a particular embodiment the conditions of this step are those of Example 1.

The process of the invention has, among others, the following advantages. No organic solvents are used like in other processes of the state of the art, thereby avoiding toxicity, environmental or inflammability problems that their use entails. Furthermore, it prevents using aqueous silicone resin emulsions as high economic cost permanent binder precursors, thereby reducing the cost of obtaining the monolithic zeolite structures. The control of the process for obtaining particularly the extrusion is simpler; in this sense the aqueous colloidal silica suspension does not modify the viscosity of the pulp because the control thereof is performed by adding the suitable amount of temporary binder and water. By knowing the amount of water necessary for forming the homogenous pulp, it is only necessary to calculate the additional amount of water to be added after having added the colloidal silica suspension, the water content of which is known. Furthermore, due to the polymeric nature of silicone, it provides an inherent viscosity that complicates calculating the amount of methylcellulose and water to obtain a suitable final viscosity.

Putting the process of the invention into practice provides a zeolite monolith which is another additional aspect of the invention.

The physical and chemical characterization of the zeolite monolith of the invention shows that the physicochemical properties of crystallinity, porous structure, acidity, etc., of the original starting materials are conserved. Furthermore the monolith has a mechanical strength with respect to cold rupture of between 0.2 and 2.0 MPa, suitable for its application in any chemical process as a catalyst or catalyst support, or even as an adsorbent, for example in the treatment of gaseous pollutant emissions. The mechanical resistance measurements were performed on cylindrical test pieces according to Standard ASTM C133-97 which were obtained according to the process of the invention.

The monolithic structure can have different shapes and dimensions depending on the application for which it is intended, with a circular or square section, for example, among others, and a density comprised between 1 and 62 cells/cm². In a particular embodiment the monolithic structure has a honeycomb-type structure.

In another additional aspect, the present invention relates to the use of the monolithic structure obtained according to the process of the invention as a catalyst and/or as a catalyst support for the chemical conversion of gaseous components, or as an adsorbent for the physicochemical separation of one or more components of a gas mixture, and particularly for the control of gaseous pollutant emissions.

The supports can furthermore have catalytically active ingredients dispersed in the monolithic zeolite structure. These ingredients can be added to the structure by means of conventional methods of the state of the art. Typically the monolithic zeolite structure of the invention, and more particularly the honeycomb-type structure, is used for controlling gaseous emissions in stationary sources of the chemical or petrochemical industry. In this sense, the use thereof allows the control of pollutant gaseous emissions, such as hydrocarbons and the derivatives thereof, nitrogen oxides, sulfur oxides, carbon monoxide, and other pollutants. The zeolite monolith can also be used in the chemical conversion of gases in the chemical or petrochemical industry. In this sense the monolithic structure can catalytically convert specific chemical compounds into others before their removal, emission into the atmosphere, or their subsequent processing. Additionally, due to the physicochemical characteristics of zeolite, the monolithic zeolite structure can be used as an adsorbent for the separation of specific components in a gaseous mixture.

In a particular embodiment the monolith is used for oxidizing volatile organic compounds (VOC) and therefore for reducing the VOC gas content of the pollutant emissions of industrial gases.

Examples of the invention set forth for better understanding the invention are described below and in no case should they be considered as a limitation of the scope thereof.

### Examples

Zeolite monoliths were prepared from the following components:

| **NH₄-ZSM5 zeolite powder** | |
|---|---|
| SiO₂/Al₂O₃ | 50 |
| Na₂O | 0.05% |
| Surface area | 425 m²g⁻¹ |

| **NH₄-BETA zeolite powder** | |
|---|---|
| SiO₂/Al₂O₃ | 25 |
| Na₂O | 0.05% |
| Surface area | 680 m²g⁻¹ |

| **Methyl cellulose** | |
|---|---|
| Viscosity | 4.000 MPa·s, 2% in H₂O(20°C) |
| Molecular weight | 80.00 g mol⁻¹ |

| **Colloidal silica** | |
|---|---|
| Concentration | 40% by weight of suspension in water |
| Molecular weight | 60.08 g mol⁻¹ |
| Surface area | ∼220 m²/g |
| pH | 9.8 |
| Density | 1300 kg m⁻³ at 25°C |

### Example 1. Preparation of a monolith

A dry mixture of zeolite BETA (CP814E of Zeolyst International) and of methylcellulose (M0512, Merck) at a ratio of 28:1 was prepared by means of mechanical stirring. An SiO₂ suspension (LUDOX HS-40, Aldrich) at 17% solid phase and water at 49% by weight was subsequently added to obtain a pulp. The composition of said pulp was the following:

| | |
|---|---|
| **Solid phase, g** | **125** |
| NH₄-BETA,% | 80 |
| Methylcellulose,% | 3 |
| SiO₂,% | 17 |
| **Liquid phase, g** | **120** |

Then after the high-shear mixing, the homogenous pulp obtained was extruded in a 19/20DN BRABENDER^{®} single screw extruder head 19 mm in diameter and 20 D long, assembled on the PLASTI-CORDER^{®} PL-2000 base, passing it through a nozzle designed to obtain honeycomb-type monolithic structures with slits of 0.6 mm wide, leading to square cells with 2.0 mm sides and a density of 20 cells·cm⁻².

The monoliths obtained were dried in a Sanyo Gallenkamp PLC drying chamber with the temperature program of the following Table:

| | **Initial conditions** | **Final conditions** | **Heating rate** |
|---|---|---|---|
| 1^{st} step | 20ºC and 80% RH | 40ºC and 70% RH | 0.15ºC·min⁻¹ |
| 2^{nd} step | 40ºC and 70% RH | 60ºC and 50% RH | 0.5ºC·min⁻¹ |
| 3^{rd} step | 60ºC and 50% RH | 100ºC and 0% RH | 2.0ºC·min⁻¹ |
| 4^{th} step | 110ºC | 110ºC | 120 minutes |

| | | | |
|---|---|---|---|
| RH: Relative Humidity | | | |

The dried monoliths were then subjected to oxidation treatment in a Thermolyne 46100 high temperature oven with a temperature program that is shown in the following Table and the monoliths of the invention were obtained.

| | **Initial temperature ºC** | **Final temperature, ºC** | **Heating rate** |
|---|---|---|---|
| 1^{st} step | 20 | 120 | 1.0ºC·min⁻¹ |
| 2^{nd} step | 120 | 120 | 30 minutes |
| 3^{rd} step | 120 | 400 | 1.0ºC·min⁻¹ |
| 4^{th} step | 400 | 400 | 30 minutes |
| 5^{th} step | 400 | 600 | 10ºC·min⁻¹ |
| 6^{th} step | 600 | 600 | 180 minutes |

### Example 2

The precursor composition described in Example 1 was extruded and solid cylindrical test pieces were obtained on which mechanical resistance assays according to Standard ASTM C133-97 were carried out. The test pieces thus prepared for the assay had a cold rupture strength of 0.71 MPa.

### Example 3

Monoliths prepared according to Example 1 were used in the treatment of industrial gases polluted with halogenated volatile organic compounds (VOC).

For such a purpose, a synthetic mixture of air with 1000 ppm of 1,2-dichloroethane (DCE) - a common compound in many residual gas streams in processes using volatile chlorinated hydrocarbons- was prepared and passed through the monolith housed in a tubular reactor, the internal temperature of which was gradually increased from 200ºC to 550ºC. The 50% conversion of the DCE (parameter used for comparing activity between catalysts) reached 255ºC.

### Example 4. Preparation of a monolith

A dry mixture of zeolite NH₄-ZSM-5 (CBV5524G by Zeolyst Internacional) and methylcellulose (M0512 Merck) was prepared at a ratio of 81:5 by means of mechanical stirring. An SiO₂ suspension (LUDOX HS-40, Aldrich) at 14% solid phase and water at 42% by weight was subsequently added to obtain a pulp. The composition of said pulp was the following:

| | |
|---|---|
| **Solid phase, g** | **190** |
| NH₄-ZSM-5,% | 81 |
| Methylcellulose,% | 5 |
| SiO₂,% | 14 |
| **Liquid phase, g** | **79.8** |

Then after high-shear mixing, the homogenous pulp obtained was extruded passing it through a nozzle designed to obtain honeycomb-type monolithic structures with slits 0.6 mm wide, leading to square cells with 2.0 mm sides and a density of 20 cells·cm⁻².

The monoliths obtained were dried and calcined as they were in Example 1.

### Example 5

The precursor composition described in Example 4 was extruded and solid cylindrical test pieces were obtained on which mechanical resistance assays were carried out according to Standard ASTM C133-97. The test pieces thus prepared for the assay had a cold rupture strength of 0.48 MPa.

### Example 6

Monoliths prepared as described in Example 4 were used in the treatment of industrial gases polluted with halogenated volatile organic compounds (VOC). For such a purpose, a synthetic mixture of air with 1000 ppm of 1,2-dichloroethane (DCE) was prepared and was passed through the monolith housed in a tubular reactor, the inner temperature of which gradually increased from 200ºC to 550ºC, the 50% conversion of DCE was reached at 265ºC.

## Claims

1. Process for preparing a zeolite-based monolith comprising the following steps:
(1) dry-mixing zeolite particles of a size less than 600 µm and a temporary binder until homogenization
(2) adding silica and water dispersion maintaining a driving torque value between 5-15 Nm, at a temperature comprised between 10 and 25ºC,
(3) wet-kneading and high-shear mixing until obtaining a homogenous pulp maintaining the temperature comprised between 10 and 25ºC,
(4) extrusion-molding the pulp resulting from the previous step maintaining the temperature of the extruder between 7 and 40ºC
(5) drying the mold obtained, increasing the temperature from room temperature to a maximum of 120ºC with a heating rate comprised between 0.01 and 1.0ºC/min and a reduction of the relative humidity from relative ambient humidity to 0%,
(6) oxidizing at a high temperature, increasing the temperature from room temperature to a maximum of 1000ºC with a heating rate comprised between 0.10 and 20ºC/min.

2. Process according to claim 1, wherein the precursor composition for preparing a zeolite-based monolith is made up of a solid phase and a water phase, where the solid phase has the following chemical composition expressed in% by weight:
| | |
|---|---|
| Zeolite | 73-88 |
| Temporary binder | 2-7 |
| SiO₂ | 10-25 |
and the amount of water is comprised between 35-95% by weight with respect to the weight of the solid phase.

3. Process according to claim 1 or 2, wherein the temporary binder is methylcellulose.

4. Process according to any one of claims 1 to 3, wherein the zeolite is ZSM-5 or BETA type and the particle size is less than 80 µm.

5. Process according to any one of claims 1 to 4, wherein the silica particles of the aqueous dispersion have a mean particle size of 11.5 nm.

6. Process according to any one of claims 1 to 5, wherein the high-shear mixing of the pulp is done maintaining the speed of the kneading blades between 1 and 5 r.p.m.

7. Process according to any one of claims 1 to 6, wherein the step of extruding the pulp is performed with an extrusion speed of between 20 and 80 r.p.m.

8. Monolith obtainable according to the process according to any one of claims 1 to 7.

9. Use of the monolith of claim 8 as a catalyst, as a catalyst support for the chemical conversion of gaseous components or as an adsorbent for the physicochemical separation of one or several components of a gas mixture.

10. Use of the monolith of claim 9 as a catalyst, as a catalyst support or as an adsorbent for the control of gaseous pollutant emissions.

11. Use of the monolith of claim 9, wherein the monolith reduces the volatile organic gas content (VOC) of the pollutant emissions of industrial gases.
